# EUROPEAN PATENT SPECIFICATION

(11) **EP 3 246 133 B1**
(45) Date of publication and mention of the grant of the patent: **10.04.2024**
(21) Application number: 15877540.3
(22) Date of filing: 12.06.2015
(51) Int. Cl.: B25J 9/16, B25J 13/00, B25J 9/00, G10L 15/00, B25J 13/08, B25J 11/00

(54) **CONTROL SYSTEM**
STEUERUNGSSYSTEM
SYSTÈME DE COMMANDE

(30) Priority: 12.01.2015 CN 201510015929
(43) Date of publication of application: 22.11.2017
(73) Proprietor: Yutou Technology (Hangzhou) Co., Ltd., Hangzhou City, Zhejiang 311199 (CN)
(72) Inventor: JIANG, Tao, Hangzhou Zhejiang 311199 (CN)
(74) Representative: Bryers Intellectual Property Ltd
(86) International application number: PCT/CN2015/081385
(87) International publication number: WO 2016/112624

(56) References cited:
- WO-A1-2007/104662
- CN-A- 101 927 492
- CN-A- 102 528 809
- CN-A- 104 269 084
- CN-U- 203 485 197
- US-A1- 2004 098 167
- US-A1- 2011 071 674

## Description

### BACKGROUND OF THE INVENTION

### 1. Field of the Invention

The invention relates to a field of robot technology, more specifically, to a control system and a control method for the behavior of a robot.

### 2. Description of the Related Art

Since 2000, with the development of the low power consumption chip based on ARM architecture, various sensor components are modularized and miniaturized, the voice technology and image technology are improved rapidly, the robot industry has developed quickly. The modern robot analyzes and executes the action which meets the requirement of the user by combining the recognizing instruction of the voice, expression and gesture made by the user and the various data sent back by the sensor. The processing method makes a breakthrough for the limits of the external input of the key and the mouse, or for the limits of the input of the precompile instruction, and it evolves the interactive model between machine and human beings into the interactive model by natural language or natural behavior.

Currently, there are two kinds of robot behavior controls: (1) Process all requests by the processor of the robot, the server is functioned as a passive service provider, the behavior of the robot is limited by the processor or by the control unit. This kind of process mode removes the dependency from the remote server, avoiding the behavior delay caused by the data transmission. However, this kind of robot has high requirements for the data processing capacity of the processor and the network cost is high as well. (2) Deliver all the behavior process to the remote server, the robot itself does not do any data analysis and processing. The robot itself only collects and transfers the data. As this kind of process manner simplifies the robot itself extremely, the manufacture cost decrease greatly. Nevertheless, all the data has to be determined after it has processed by the server, thus the reaction speed of the robot is affected. Meanwhile, the simplified front-end robot involve the modesty of the function without doing any complicated action.

US2004/098167A1 refers to home robot using supercomputer, and home network system having the same, the home robot controlled by a remote supercomputer, when a user gives a voice command to the home robot, the home robot A/D converts the voice command and transmits the converted command to the supercomputer through a home gateway and a communication network. A control unit in the supercomputer interprets the voice command. Service modules produce appropriate response commands based on the interpreted voice command. The response commands are transmitted to the home robot over a communication network. A control unit in the home robot receives the response commands, and upon analysis thereof, controls one or more actions of the home robot by generating one or more of a digital voice signal, motion control signal and an image signal.

### SUMMARY OF THE INVENTION

To address the disadvantages of the prior art, the invention provides a control system with low cost and high efficiency.

The technical solution of the invention is defined in claim 1.

Preferably, the collection device comprises:
a sound capture module connected to the first communication unit to capture a voice message, and to form and output a transformed voice collection data matched to the first communication unit;
an image capture module connected to the first communication unit to capture an image message, and to form and output a transformed image collection data matched to the first communication unit.

Preferably, the first processing unit comprises:
a voice recognition unit connected to the sound capture module to recognize a voice control command according to the transformed voice collection data;
an image recognition unit connected to the image capture module to recognize an image control command according to the transformed image collection data.

Preferably, it further comprises a detecting unit connected to the second processing unit, to detect the status information of the robot at present physical environment, and to form a detection information output to the second processing unit.

Preferably, the detecting unit comprises:
a temperature sensor connected to the second processing unit, to acquire the temperature information of the present physical environment, and to form a temperature signal and output the temperature signal to the second processing unit;
a displacement sensor connected to the second processing unit, to acquire position information of the present physical environment, and to form a position signal and output the position signal to the second processing unit.

Preferably, the execution unit comprises:
an audio play unit connected to the second processing unit to execute an action of audio play under the effect of the control signal which is output by the second processing unit and is in relevant to the audio play unit;
a drive unit connected to the second processing unit to execute an action of position movement under the effect of the control signal which is output by the second processing unit and is in relevant to the drive unit;
the control system also comprises a timing device, connected to the control end of the audio play unit, the control end of the light regulation unit, and the control end of the temperature regulation unit respectively, to output timing control signal, to provide timing control the audio play unit, light regulation unit, temperature regulation unit.

Preferably, the audio play unit is an audio play device inside the robot and/or an audio play device in the present environment where the robot locates, whose control end is connected to the corresponding output end of the second processing unit.

The benefit of the invention compared to the prior art is: by the cooperation in the use of the first processing unit and the second processing unit, the complicated operation with which the second processing unit can not accomplish is transferred to the first processing unit, the first processing unit then accomplish the operation, thus the processing speed and accuracy are increased. Meanwhile the simple logic operation processed by the first processing unit is transferred to the second processing unit, the second processing unit then processes the logic operation, and forms control signal to control the execution unit, so that the delayed processing of the execution unit is avoided, the processing demands of the second processing unit is reduced, the production cost and the maintenance charge is decreased.

### BRIEF DESCRIPTIONS OF THE DRAWINGS

Figure 1 is a structure schematic structure view of the control system according to the invention.
Figure 2 is a flow chart of the control method according to the invention.

### DETAILED DESCRIPTIONS

The following is the further description of the invention by combining the drawing and the embodiments, and it can not be the limitation for the invention.

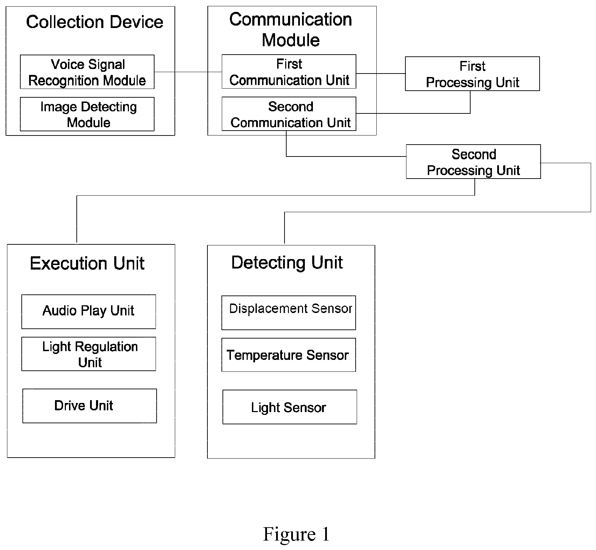

Referring to Figure 1, it shows a control system which is applied to the robot behavioral control system, wherein it comprises:
a collection device configured on a preset position of the robot to collect operation instructions input by the user, and to form an output of collection data;
a communication module including a first communication unit and a second communication unit, the first communication unit being connected to the collection device to receive the collection data, and transforming the collection data to the output of the collection data matched to the first communication unit;
a first processing unit connected to the first communication unit and the second communication unit respectively, to receive the collection data, and to recognize and process the collection data, to form a control command output by the second communication unit;
a second processing unit connected to the second communication unit to receive the control command output by the second communication unit, and form output of control instruction according to the control command;
an execution unit connected to the second processing unit to execute actions under the effect of the control instruction, and the action being matched to the control instruction.

The operation principle of the invention is: the image collection device collects the operation instruction input by the user, and forms the collection data which is output to the first processing unit by the first communication unit, the operation instruction can further be a gesture action command or voice command. The first processing unit recognizes the control command according to the collection data, and transfer the control command to the second processing unit by the second communication unit. The second processing unit forms a control instruction which controls the execution unit according to the control command. The first processing unit is a remote processing unit which can be formed by servers, to preprocess the collection signal output by the collection device, the first processing unit is mainly used to process and calculate the data relationship with complicated logic, and to transform it into data relationship with simple logic structure and output it. The second processing unit can be a local processing unit configured at the inner of the robot, the second processing unit is mainly used to process the data relationship with simple logic, and to form control instruction to drive the execution unit to execute corresponding action. When the communication module is failed and the transmission function is unavailable, the second processing unit can also execute the transmission and process with complicated logic, and form output of the control instruction. In the invention, by the cooperation in the use of the first processing unit and the second processing unit, the complicated operation with which the second processing unit spends a lot of time to accomplish is transferred to the first processing unit, and the operation is processed by the remote processing capacity of the first processing unit, thus the processing speed and accuracy are increased. Meanwhile the simple logic operation processed by the first processing unit is transferred to the second processing unit, the second processing unit then processes the logic operation, and forms control signal to control the execution unit, to avoid the delayed processing of the execution unit, and to decrease the processing demands of the second processing unit, to decrease the production cost and the maintenance charge including network maintenance cost, so that the user has well experience.

Based on the above technical solution, the collection device can comprises a sound capture module connected to the first communication unit to capture the voice message, and to form voice collection data matched to the first communication unit format, the voice collection data is output to the first processing unit, the first processing unit recognizes the voice control command according to the voice collection data.

Based on the above technical solution, the collection device can comprises an image capture module connected to the first communication unit to capture the image message, and to form output of image collection data matched to the first communication unit format. The first communication unit recognizes the image control command according to the image collection data, and transfers the image control command to the second processing unit by the second communication unit. The image information can include gesture action signal and face information.

Based on the above technical solution, the first communication unit can be long distance communication module, the second communication unit can be a Bluetooth communication module, a WiFi communication module, a Zigbee communication module or other close distance communication module.

Based on the above technical solution, the first processing unit comprises a voice recognition unit connected to the sound capture module to recognize voice control command according to the voice collection data.

Based on the above technical solution, the first processing unit comprises an image recognition unit connected to the image capture module to recognize image control command according to the image collection data.

Based on the above technical solution, the second processing unit comprises a memory unit, the memory unit has a plurality of preset scene modes and matching relations between the scene modes and the status information of physical environment. The scene modes include the information parameters such as time, data and geographical location.

Based on the above technical solution, the second processing unit is connected to the detecting unit, the detecting unit is configured to detect the status of the present physical environment, and to form detecting data output to the second processing data, the second processing data acquires the present scene mode according to the detecting data. The second processing unit further forms the control instruction according to the present scene mode and the control command output by the first processing unit, and transfers the control instruction to the execution unit. Meanwhile the second processing unit sends the present scene mode, control command and control instruction to the first processing unit by the second communication unit, the first processing unit analyzes the received data, to form analysis result to return to the second processing unit, the first processing unit updates the relationship between the physical environment in the memory unit and the scene mode according to the analysis result. By analyzing the operation the user "used to" do and acquiring the control instruction required by the user, the response is accomplished at once, and the operation by the user is reduced. The operation the user "used to" do can be acquired by frequent operating instructions. And the method for the acquirement is various and it is not described any more.

Based on the above technical solution, the detecting unit comprises:
a temperature sensor connected to the second processing unit, to acquire the temperature information of present environment, and to form a temperature signal output to the second processing unit. The second processing unit forms an output of temperature control signal according to the present temperature signal.
a light sensor connected to the second processing unit, to acquire the light information of present environment, and to form a light signal output to the second processing unit. The second processing unit forms an output of light control signal according to the present light signal.
a displacement sensor connected to the second processing unit, to acquire the position information of present environment, and to form a position signal output to the second processing unit. The second processing unit forms an output of position control signal according to the present position signal.

As a further preferred solution, the control signal comprises an audio control signal, a light control signal, a displacement control signal, the execution unit can also comprises:
an audio play unit connected to the second processing unit to execute the action of audio play under the effect of the control signal which is output by the second processing unit and is in relevant to the audio play unit; further, the audio play unit is an audio play device inside the robot and/or an audio play device in the present environment where the robot locates, whose control end is connected to the corresponding output end of the second processing unit.
a light regulation unit connected to the second processing unit to execute the action of light regulation under the effect of the control signal which is output by the second processing unit and is in relevant to the light regulation unit; the light regulation unit is the lighting system in the present environment where the robot locates, whose control end is connected to the corresponding output end of the second processing unit, to regulate the light intensity of the present environment.
a drive unit connected to the second processing unit to execute the action of position movement under the effect of the control signal which is output by the second processing unit and is in relevant to the drive unit. For example, when the collection unit needs to collect the image information, the second processing unit sends out the control signal, the drive unit drives the robot to move under the effect of the control signal, and selects the image information which matches to the control signal.

The invention can also includes timing device connected to the control end of the audio play unit, the control end of the light regulation unit, and the control end of the temperature regulation unit respectively, to output the timing control signal, to timing control the audio play unit, light regulation unit, temperature regulation unit, so that the robot can be utilized conveniently.

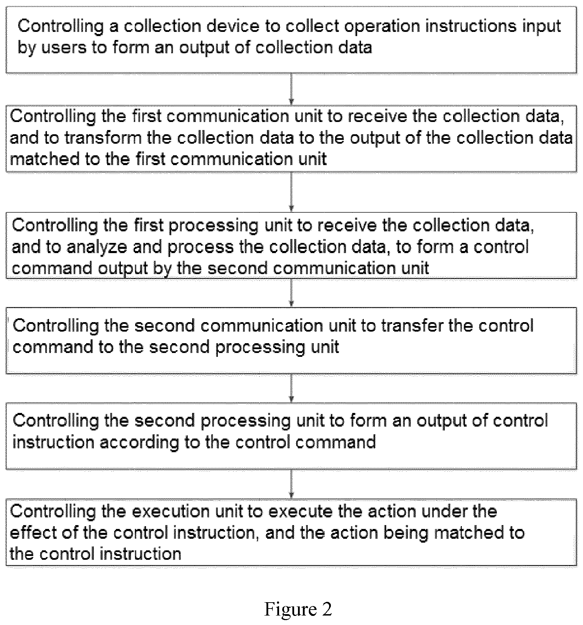

Referring to Figure 2, the invention also provides a control method which is applied to robot behavioral control system, wherein it comprises the steps of
controlling a collection device to collect operation instructions input by users to form an output of collection data;
controlling the first communication unit to receive the collection data, and to transform the collection data to the output of the collection data matched to the first communication unit;
controlling the first processing unit to receive the collection data, and to analyze and process the collection data, to form a control command output by the second communication unit;
controlling the second communication unit to transfer the control command to the second processing unit;
controlling the second processing unit to form an output of control instruction according to the control command;
controlling the execution unit to execute the action under the effect of the control instruction, and the action being matched to the control instruction.

The operation principle of the control method is described in the above description and it will not be explained any more.

The above description is only the preferred embodiments of the invention, and it does not limit the implement method and protecting scope of the invention. It is obvious for the skilled in the art that the changing and variation made by the specification and drawings of the invention should fall into the scope of the invention.

## Claims

1. A control system, applied to behavioral control of home service robot, comprising:
a collection device configured on a preset position of the robot to collect operation instructions input by a user, and to form and output a collection data;
a communication module including a first communication unit and a second communication unit, the first communication unit being connected to the collection device to receive the collection data, and transforming the collection data to a transformed collection data matched to the first communication unit;
a first processing unit connected to the first communication unit and the second communication unit respectively, to receive the transformed collection data, and to recognize and process the transformed collection data, to form a control command and output the control command by the second communication unit;
a second processing unit connected to the second communication unit to receive the control command and to form and output a control instruction according to the control command;
an execution unit connected to the second processing unit to execute each of the actions under effect of the control instruction, and each of the actions being matched to the control instruction ;
the first processing unit is a remote processing unit and the second processing unit is a local processing unit;
a detecting unit connected to the second processing unit, to detect status information of a present physical environment where the robot locates, and to form a detection information and output the status information to the second processing unit, the status information comprises temperature information of the present physical environment, light information of the present physical environment, position information of the present physical environment;
the second processing unit comprises a memory unit, the memory unit comprising a plurality of preset scene modes and matching relations between the plurality of preset scene modes and the status information of the present physical environment; wherein
the second processing unit is configured to send a present scene mode, control command and control instruction to the first processing unit by the second communication unit, the first processing unit is configured to analyze received data, to form an analysis result to return to the second processing unit, the first processing unit is configured to update the matching relations according to the analysis result;
the detecting unit comprises a light sensor connected to the second processing unit, to acquire the light information of the present physical environment, and to form a light signal and output the light signal to the second processing unit;
the execution unit comprises a light regulation unit connected to the second processing unit to execute an action of light regulation under the effect of the control instruction which is output by the second processing unit and which is relevant to the light regulation unit; the light regulation unit is a lighting system in the present environment where the robot locates, whose control end is connected to the corresponding output end of the second processing unit, to regulate light intensity of the present physical environment.

2. The control system as claimed in Claim 1, wherein the collection device comprises:
a sound capture module connectable to the first communication unit to capture a voice message, and to form and output a transformed voice collection data matched to the first communication unit;
an image capture module connectable to the first communication unit to capture an image message, and to form and output a transformed image collection data matched to the first communication unit.

3. The control system as claimed in Claim 2, wherein the first processing unit comprises:
a voice recognition unit connectable to the sound capture module to recognize a voice control command according to the transformed voice collection data;
an image recognition unit connectable to the image capture module to recognize an image control command according to the transformed image collection data.

4. The control system as claimed in Claim 1, wherein the detecting unit comprises:
a temperature sensor connectable to the second processing unit, to acquire the temperature information of the present physical environment, and to form a temperature signal and output the temperature signal to the second processing unit;
a displacement sensor connectable to the second processing unit, to acquire position information of the present physical environment, and to form a position signal and output the position signal to the second processing unit.

5. The control system as claimed in Claim 1, wherein the execution unit comprises:
an audio play unit connectable to the second processing unit to execute an action of audio play under the effect of the control instruction which is output by the second processing unit and which is in relevant to the audio play unit;
a drive unit connectable to the second processing unit to execute an action of position movement under the effect of the control instruction which is output by the second processing unit and which is in relevant to the drive unit;
the control system also comprises a timing device, connectable to the control end of the audio play unit, the control end of the light regulation unit, and the control end of the temperature regulation unit respectively, to output timing control signal, to provide timing control the audio play unit, light regulation unit, temperature regulation unit.

6. The control system as claimed in Claim 4, wherein the audio play unit is an audio play device inside the robot or an audio play device in the present physical environment where the robot locates, whose control end is connected to the corresponding output end of the second processing unit.

## Patentansprüche

1. Steuerungssystem für die Verhaltenssteuerung eines Heimservice-Roboters, das Folgendes umfasst:
eine Sammelvorrichtung, die an einer voreingestellten Position des Roboters konfiguriert ist, um von einem Benutzer eingegebene Betriebsanweisungen zu sammeln und um Sammeldaten zu bilden und auszugeben;
ein Kommunikationsmodul mit einer ersten Kommunikationseinheit und einer zweiten Kommunikationseinheit, wobei die erste Kommunikationseinheit mit der Sammelvorrichtung verbunden ist, um die Sammeldaten zu empfangen, und die Sammeldaten in transformierte Sammeldaten umwandelt, die an die erste Kommunikationseinheit angepasst sind;
eine erste Verarbeitungseinheit, die mit der ersten Kommunikationseinheit bzw. der zweiten Kommunikationseinheit verbunden ist, um die transformierten Sammeldaten zu empfangen und die transformierten Sammeldaten zu erkennen und zu verarbeiten, um einen Steuerbefehl zu bilden und den Steuerbefehl durch die zweite Kommunikationseinheit auszugeben;
eine zweite Verarbeitungseinheit, die mit der zweiten Kommunikationseinheit verbunden ist, um den Steuerbefehl zu empfangen und eine Steueranweisung entsprechend dem Steuerbefehl zu bilden und auszugeben;
eine Ausführungseinheit, die mit der zweiten Verarbeitungseinheit verbunden ist, um jede der Aktionen unter der Wirkung der Steueranweisung auszuführen, wobei jede der Aktionen auf die Steueranweisung abgestimmt ist;
wobei die erste Verarbeitungseinheit eine entfernte Verarbeitungseinheit und die zweite Verarbeitungseinheit eine lokale Verarbeitungseinheit ist;
wobei eine Erkennungseinheit mit der zweiten Verarbeitungseinheit verbunden ist, um Statusinformationen einer gegenwärtigen physikalischen Umgebung zu erkennen, in der sich der Roboter befindet, und um eine Erkennungsinformation zu bilden und die Statusinformationen an die zweite Verarbeitungseinheit auszugeben, wobei die Statusinformationen Temperaturinformationen der gegenwärtigen physikalischen Umgebung, Lichtinformationen der gegenwärtigen physikalischen Umgebung und Positionsinformationen der gegenwärtigen physikalischen Umgebung umfassen;
wobei die zweite Verarbeitungseinheit eine Speichereinheit umfasst und die Speichereinheit eine Vielzahl von voreingestellten Szenenmodi und Anpassungsbeziehungen zwischen der Vielzahl von voreingestellten Szenenmodi und den Statusinformationen der gegenwärtigen physikalischen Umgebung umfasst;
wobei die zweite Verarbeitungseinheit so konfiguriert ist, dass sie einen aktuellen Szenenmodus, einen Steuerbefehl und eine Steueranweisung über die zweite Kommunikationseinheit an die erste Verarbeitungseinheit sendet, wobei die erste Verarbeitungseinheit so konfiguriert ist, dass sie die empfangenen Daten analysiert, um ein Analyseergebnis zu bilden, das an die zweite Verarbeitungseinheit zurückgegeben wird, wobei die erste Verarbeitungseinheit so konfiguriert ist, dass sie die Anpassungsbeziehungen entsprechend dem Analyseergebnis aktualisiert;
wobei die Erkennungseinheit einen Lichtsensor umfasst, der mit der zweiten Verarbeitungseinheit verbunden ist, um die Lichtinformationen der gegenwärtigen physikalischen Umgebung zu erfassen und ein Lichtsignal zu bilden und das Lichtsignal an die zweite Verarbeitungseinheit auszugeben;
wobei die Ausführungseinheit eine Lichtregelungseinheit umfasst, die mit der zweiten Verarbeitungseinheit verbunden ist, um eine Lichtregelungsaktion unter der Wirkung der Steueranweisung auszuführen, die von der zweiten Verarbeitungseinheit ausgegeben wird und die für die Lichtregelungseinheit relevant ist;
wobei die Lichtregelungseinheit ein Beleuchtungssystem in der gegenwärtigen Umgebung ist, in der sich der Roboter befindet, dessen Steuerende mit dem entsprechenden Ausgangsende der zweiten Verarbeitungseinheit verbunden ist, um die Lichtintensität der gegenwärtigen physikalischen Umgebung zu regeln.

2. Steuerungssystem nach Anspruch 1, wobei die Sammelvorrichtung Folgendes umfasst:
ein Tonerfassungsmodul, das mit der ersten Kommunikationseinheit verbunden werden kann, um eine Sprachnachricht zu erfassen und um transformierte Sprachsammlungsdaten zu bilden und auszugeben, die an die erste Kommunikationseinheit angepasst sind;
ein Bilderfassungsmodul, das mit der ersten Kommunikationseinheit verbunden werden kann, um eine Bildnachricht zu erfassen und um transformierte Bildsammlungsdaten zu bilden und auszugeben, die an die erste Kommunikationseinheit angepasst sind.

3. Steuerungssystem nach Anspruch 2, wobei die erste Verarbeitungseinheit Folgendes umfasst:
eine Spracherkennungseinheit, die mit dem Tonerfassungsmodul verbunden werden kann, um einen Sprachsteuerungsbefehl gemäß den umgewandelten Sprachsammlungsdaten zu erkennen;
eine Bilderkennungseinheit, die mit dem Bilderfassungsmodul verbunden werden kann, um einen Bildsteuerungsbefehl gemäß den transformierten Bildsammlungsdaten zu erkennen.

4. Steuerungssystem nach Anspruch 1, wobei die Erkennungseinheit Folgendes umfasst:
einen Temperatursensor, der mit der zweiten Verarbeitungseinheit verbunden werden kann, um die Temperaturinformationen der gegenwärtigen physikalischen Umgebung zu erfassen, ein Temperatursignal zu bilden und das Temperatursignal an die zweite Verarbeitungseinheit auszugeben;
einen Wegsensor, der mit der zweiten Verarbeitungseinheit verbunden werden kann, um Positionsinformationen der gegenwärtigen physikalischen Umgebung zu erfassen, ein Positionssignal zu bilden und das Positionssignal an die zweite Verarbeitungseinheit auszugeben.

5. Steuerungssystem nach Anspruch 1, wobei die Ausführungseinheit Folgendes umfasst:
eine Audiowiedergabeeinheit, die mit der zweiten Verarbeitungseinheit verbunden werden kann, um eine Audiowiedergabeaktion unter der Wirkung der Steueranweisung auszuführen, die von der zweiten Verarbeitungseinheit ausgegeben wird und die für die Audiowiedergabeeinheit relevant ist;
eine Antriebseinheit, die mit der zweiten Verarbeitungseinheit verbunden werden kann, um eine Positionsbewegung unter der Wirkung der Steueranweisung auszuführen, die von der zweiten Verarbeitungseinheit ausgegeben wird und die für die Antriebseinheit relevant ist;
wobei das Steuersystem auch ein Zeitmessgerät umfasst, das mit dem Steuerende der Audiowiedergabeeinheit, dem Steuerende der Lichtregulierungseinheit bzw. dem Steuerende der Temperaturregulierungseinheit verbunden werden kann, um ein Zeitsteuerungssignal auszugeben, um eine Zeitsteuerung der Audiowiedergabeeinheit, der Lichtregulierungseinheit und der Temperaturregulierungseinheit bereitzustellen.

6. Steuerungssystem nach Anspruch 4, wobei die Audiowiedergabeeinheit eine Audiowiedergabevorrichtung innerhalb des Roboters oder eine Audiowiedergabevorrichtung in der gegenwärtigen physikalischen Umgebung ist, in der sich der Roboter befindet, dessen Steuerende mit dem entsprechenden Ausgangsende der zweiten Verarbeitungseinheit verbunden ist.

## Revendications

1. Système de contrôle, appliqué au contrôle comportemental d'un robot de service domestique, comprenant :
un dispositif de collecte configuré sur une position prédéfinie du robot pour collecter les instructions d'opération entrées par un utilisateur, et pour former et délivrer en sortie des données de collecte ;
un module de communication comprenant une première unité de communication et une seconde unité de communication, la première unité de communication étant connectée au dispositif de collecte pour recevoir les données de collecte, et transformant les données de collecte en données de collecte transformées adaptées à la première unité de communication ;
une première unité de traitement connectée à la première unité de communication et à la seconde unité de communication, respectivement, pour recevoir les données de collecte transformées, et pour reconnaître et traiter les données de collecte transformées, pour former une commande de contrôle et délivrer en sortie la commande de contrôle par la seconde unité de communication ;
une seconde unité de traitement connectée à la seconde unité de communication pour recevoir la commande de contrôle et pour former et délivrer en sortie une instruction de contrôle en fonction de la commande de contrôle ;
une unité d'exécution connectée à la seconde unité de traitement pour exécuter chacune des actions sous l'effet de l'instruction de contrôle, et chacune des actions correspondant à l'instruction de contrôle ;
la première unité de traitement étant une unité de traitement à distance et la seconde unité de traitement étant une unité de traitement locale ;
une unité de détection connectée à la seconde unité de traitement, pour détecter les informations d'état d'un environnement physique présent dans lequel le robot se trouve, et pour former des informations de détection et délivrer en sortie les informations d'état à la seconde unité de traitement, les informations d'état comprenant des informations de température de l'environnement physique présent, des informations de lumière de l'environnement physique présent et des informations de position de l'environnement physique présent ;
la seconde unité de traitement comprenant une unité de mémoire, l'unité de mémoire comprenant une pluralité de modes de scène prédéfinis et des relations de correspondance entre la pluralité de modes de scène prédéfinis et les informations d'état de l'environnement physique présent ;
dans lequel la seconde unité de traitement est configurée pour envoyer un mode de scène présent, une commande de contrôle et une instruction de contrôle à la première unité de traitement par la seconde unité de communication, la première unité de traitement est configurée pour analyser les données reçues, pour former un résultat d'analyse à renvoyer à la seconde unité de traitement, la première unité de traitement est configurée pour mettre à jour les relations de correspondance conformément au résultat d'analyse ;
l'unité de détection comprend un capteur de lumière connecté à la seconde unité de traitement, afin d'acquérir les informations de lumière de l'environnement physique présent et de former un signal de lumière et délivrer en sortie le signal de lumière à la seconde unité de traitement ;
l'unité d'exécution comprend une unité de régulation de lumière connectée à la seconde unité de traitement pour exécuter une action de régulation de la lumière sous l'effet de l'instruction de contrôle délivrée en sortie par la seconde unité de traitement et qui est pertinente pour l'unité de régulation de lumière ; l'unité de régulation de lumière est un système d'éclairage dans l'environnement présent dans lequel se trouve le robot, dont l'extrémité de contrôle est connectée à l'extrémité de sortie correspondante de la seconde unité de traitement, afin de réguler l'intensité de la lumière de l'environnement physique présent.

2. Système de contrôle tel que revendiqué dans la revendication 1, dans lequel le dispositif de collecte comprend :
un module de capture de son pouvant être connecté à la première unité de communication pour capturer un message vocal, et pour former et délivrer en sortie des données de collecte de voix transformées correspondant à la première unité de communication ;
un module de capture d'image pouvant être connecté à la première unité de communication pour capturer un message d'image, et pour former et délivrer en sortie des données de collecte d'image transformées correspondant à la première unité de communication.

3. Système de contrôle tel que revendiqué dans la revendication 2, dans lequel la première unité de traitement comprend :
une unité de reconnaissance de voix pouvant être connectée au module de capture de son pour reconnaître une commande de contrôle vocal conformément aux données de collecte de voix transformées ;
une unité de reconnaissance d'image pouvant être connectée au module de capture d'image pour reconnaître une commande de contrôle d'image conformément aux données de collecte d'image transformées.

4. Système de contrôle tel que revendiqué dans la revendication 1, dans lequel l'unité de détection comprend :
un capteur de température pouvant être connecté à la seconde unité de traitement, pour acquérir les informations de température de l'environnement physique présent, et pour former un signal de température et délivrer en sortie le signal de température à la seconde unité de traitement ;
un capteur de déplacement pouvant être connecté à la seconde unité de traitement, pour acquérir les informations de position de l'environnement physique présent, et pour former un signal de position et délivrer en sortie le signal de position à la seconde unité de traitement.

5. Système de contrôle tel que revendiqué dans la revendication 1, dans lequel l'unité d'exécution comprend :
une unité de lecture audio pouvant être connectée à la seconde unité de traitement pour exécuter une action de lecture audio sous l'effet de l'instruction de contrôle qui est délivrée en sortie par la seconde unité de traitement et qui est pertinente pour l'unité de lecture audio ;
une unité d'entraînement pouvant être connectée à la seconde unité de traitement pour exécuter une action de mouvement de position sous l'effet de l'instruction de contrôle délivrée en sortie par la seconde unité de traitement et qui est pertinente pour l'unité d'entraînement ;
le système de contrôle comprenant également un dispositif de synchronisation, pouvant être connecté à l'extrémité de contrôle de l'unité de lecture audio, à l'extrémité de contrôle de l'unité de régulation de lumière et à l'extrémité de contrôle de l'unité de régulation de la température, respectivement, pour délivrer en sortie un signal de contrôle de synchronisation, afin de fournir un contrôle de synchronisation à l'unité de lecture audio, à l'unité de régulation de la lumière et à l'unité de régulation de la température.

6. Système de contrôle tel que revendiqué dans la revendication 4, dans lequel l'unité de lecture audio est un dispositif de lecture audio à l'intérieur du robot ou un dispositif de lecture audio dans l'environnement physique présent dans lequel se trouve le robot, dont l'extrémité de contrôle est connectée à l'extrémité de sortie correspondante de la seconde unité de traitement.
